(19) **Europäisches Patentamt / European Patent Office / Office européen des brevets**

(11) **EP 3 084 031 B2**

(12) **NOUVEAU FASCICULE DE BREVET EUROPEEN**
Après la procédure d'opposition

(45) Date de publication et mention de la décision concernant l'opposition:
**29.12.2021 Bulletin 2021/52**

(45) Mention de la délivrance du brevet:
**04.04.2018 Bulletin 2018/14**

(21) Numéro de dépôt: **13826634.1**

(22) Date de dépôt: **20.12.2013**

(51) Int Cl.:
**C23C 2/06** (2006.01)  **C23C 2/20** (2006.01)

(86) Numéro de dépôt international:
**PCT/IB2013/061222**

(87) Numéro de publication internationale:
**WO 2015/092493 (25.06.2015 Gazette 2015/25)**

(54) **PROCÉDÉ DE RÉALISATION D'UNE TÔLE À REVÊTEMENT ZNALMG AVEC UN ESSORAGE OPTIMISÉ ET TÔLE CORRESPONDANTE**

VERFAHREN ZUR HERSTELLUNG EINES ZNALMG-BESCHICHTETEN BLECHS FÜR OPTIMIERTES ABWISCHEN UND ENTSPRECHENDES BLECH

PROCESS FOR PRODUCING A ZNALMG-COATED METAL SHEET WITH OPTIMIZED WIPING AND CORRESPONDING METAL SHEET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**26.10.2016 Bulletin 2016/43**

(73) Titulaire: **Arcelormittal**
**1160 Luxembourg (LU)**

(72) Inventeur: **MATAIGNE, Jean-Michel**
**F-60300 Senlis (FR)**

(74) Mandataire: **Lavoix**
**2, place d'Estienne d'Orves**
**75441 Paris Cedex 09 (FR)**

(56) Documents cités:
EP-A1- 2 119 804        EP-A1- 2 634 283
EP-A1- 2 634 284        EP-A1- 2 634 284
EP-B1- 0 365 682        WO-A1-2010/130883
WO-A2-2012/091385       DE-A1- 1 796 324
US-A1- 2011 177 253     US-B1- 6 379 820
US-B1- 6 677 058

- **Norme ASTM A 653/A 653 M de 2010**
- **Centre canadien d'hygiène et de sécurité au travail, "Écrans'd ordinateur et couleurs de l'affichage",' (05.03.2010)**

**Description**

La présente invention concerne un procédé de réalisation d'une tôle comprenant un substrat en acier dont au moins une face est revêtue par un revêtement métallique comprenant de l'Al et du Mg, le reste du revêtement métallique étant du Zn, des impuretés inévitables et éventuellement un ou plusieurs éléments additionnels choisis parmi Si, Sb, Pb, Ti, Ca, Mn, Sn, La, Ce, Cr, Zr ou Bi, la teneur en poids de chaque élément additionnel dans le revêtement métallique étant inférieure à 0,3%, le revêtement métallique ayant une teneur en poids d'Al comprise entre 0,5 et 8% et une teneur en poids de Mg comprise entre 0,3 et 3,3%, le procédé comprenant au moins des étapes de :

- fourniture du substrat,
- dépôt d'un revêtement métallique sur au moins une face par trempe du substrat dans un bain pour obtenir la tôle,
- essorage du revêtement métallique par au moins une buse projetant par au moins une sortie un gaz d'essorage sur le revêtement métallique, la tôle défilant devant la buse, le gaz d'essorage étant éjecté de la buse le long d'une direction principale d'éjection, un caisson de confinement délimitant une zone confinée au moins en aval de la zone d'impact du gaz d'essorage sur la tôle,
- solidification du revêtement métallique.

Une telle tôle est plus particulièrement destinée à la fabrication de pièces de carrosserie pour un véhicule terrestre à moteur tel qu'un véhicule automobile.

La tôle est alors découpée et déformée pour réaliser des pièces qui sont assemblées pour former la carrosserie ou caisse.

Cette caisse est ensuite revêtue par un film de peinture (ou système peinture), lequel assure un bon aspect de surface et participe, avec le revêtement métallique à base de zinc, à la protection contre la corrosion.

Certaines de ces tôles peuvent présenter des défauts visibles à l'oeil nu avant leur mise en peinture.

Ces défauts consistent en une alternance de zones mates et brillantes à la surface extérieure des revêtements métalliques. Ces zones sont alternées le long de la direction longitudinale des tôles, c'est-à-dire celle correspondant au sens de défilement des tôles lors de leur procédé de réalisation.

Les zones mates ont généralement une longueur double de celle des zones brillantes.

Même si les exigences des constructeurs automobiles sont satisfaites après mise en peinture, ces défauts visibles à l'oeil nu ont un impact négatif sur la perception que les constructeurs automobiles ont de la qualité des tôles.

Par ailleurs, ces défauts sont encore plus problématiques pour les applications où les tôles ne sont pas mises en peinture.

Un but de l'invention est donc de fournir un procédé de réalisation d'une tôle, comprenant un substrat dont au moins une face a été revêtue ou trempée par un revêtement métallique à base de zinc et comprenant entre 0,5 et 8% en poids d'Al et entre 0,5 et 3,3 % en poids de Mg, la surface extérieure du revêtement métallique ayant un aspect esthétique amélioré.

A cet effet, l'invention a pour objet un procédé selon la revendication 1.

Le procédé peut également comprendre les caractéristiques des revendications 2 à 9, prises isolément ou en combinaison.

L'invention va être illustrée par des exemples donnés à titre indicatif, et non limitatif, et en référence aux figures annexées sur lesquelles :

- la figure 1 est une vue schématique en coupe illustrant la structure d'une tôle obtenue par le procédé selon l'invention,
- la figure 2 est une vue schématique de côté illustrant un creuset et des buses d'essorage pour réaliser la tôle de la figure 1,
- la figure 3 est une vue partielle, schématique et agrandie de la partie cerclée III de la figure 2,
- la figure 4 est une vue schématique prise selon la flèche IV de la figure 3, et illustrant la forme de la sortie de la buse de la figure 3, et
- la figure 5 est un cliché d'une tôle présentant les défauts mentionnés précédemment.

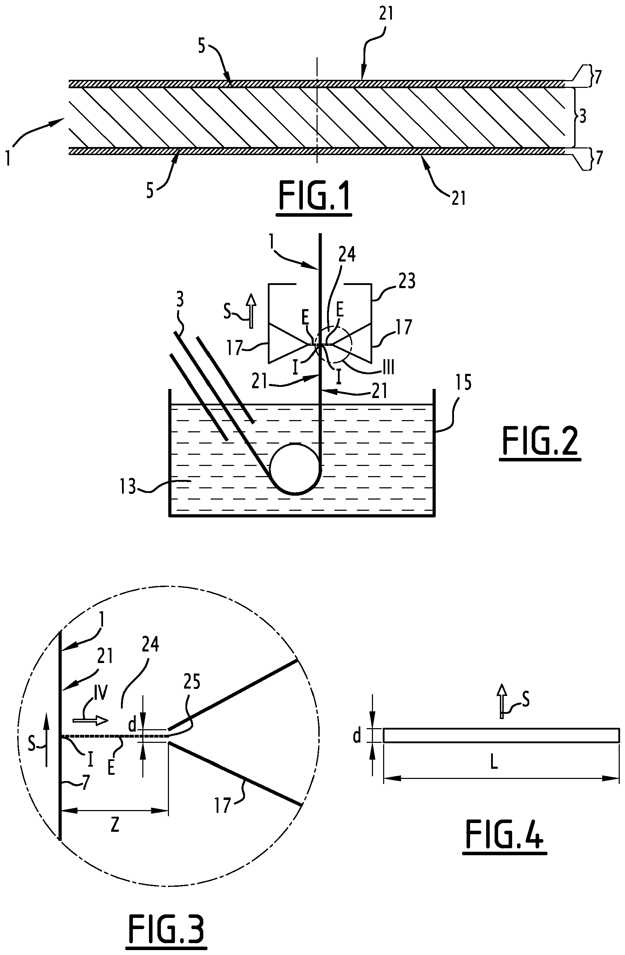

La tôle 1 de la figure 1 comprend un substrat 3 en acier recouvert sur chacune de ses deux faces 5 par un revêtement métallique 7.

On observera que les épaisseurs relatives du substrat 3 et des différentes couches le recouvrant n'ont pas été respectées sur la figure 1 afin de faciliter la représentation.

Les revêtements 7 présents sur les deux faces 5 sont analogues et un seul sera décrit en détail par la suite. En variante (non-représentée), seule une des faces 5 présente un revêtement 7.

Le revêtement 7 a généralement une épaisseur inférieure ou égale à 25 $\mu$m et vise à protéger le substrat 3 contre la corrosion.

Le revêtement 7 comprend du zinc, de l'aluminium et du magnésium.

La teneur en poids d'aluminium du revêtement métallique 7 est comprise entre 0,5 et 8%, de préférence entre 4,4 et 5,6%, de préférence encore entre 0,5 et 4,5%, de préférence encore entre 0,5 et 3,9%, de préférence encore entre 1,0 et 3,9%, de préférence encore entre 1,5 et 3,9%, et de préférence encore 2 et 3,9%. La teneur en poids de magnésium du revêtement métallique 7 est comprise entre 0,3 et 3,3%, de préférence entre 0,3 et 1,5%, de préférence encore entre 0,3 et 0,7%, de préférence encore entre 0,5 et 3,3%, de préférence encore entre 1,0 et 3,3%, de préférence encore entre 1,5 et 3,3%, de préférence encore entre 2 et 3,3%, et de préférence encore entre 2,5 et 3,3%.

Ces teneurs correspondent à celles du bain utilisé pour réaliser le revêtement 7 et qui sera décrit ultérieurement.

Ces teneurs sont celles qui peuvent être mesurées en surface et dans la masse du revêtement métallique 7, par exemple par spectrométrie à décharge luminescente. Ces teneurs ne tiennent pas compte de la composition de l'interface entre le revêtement 7 et le substrat 3 où la formation d'intermétalliques conduit à une augmentation locale de la teneur en aluminium.

Ainsi, pour mesurer les teneurs selon le présent document, il ne faut pas utiliser une technique par dissolution chimique qui conduirait à la dissolution simultanée du revêtement métallique 7 et de ces intermétalliques et donc à une surestimation de la teneur en poids d'aluminium de l'ordre de 0,05 à 0,5% en fonction de l'épaisseur du revêtement métallique 7.

Pour réaliser la tôle 1, on peut par exemple procéder comme suit.

On utilise un substrat 3 sous forme d'une bande obtenue par exemple par laminage à chaud puis à froid.

De préférence, pour le laminage à froid, on commence par laminer à froid le substrat 3 avec un taux de réduction généralement compris entre 60 et 85%, de manière à obtenir un substrat 3 d'épaisseur comprise par exemple entre 0,2 et 2 mm.

Le substrat 3 laminé à froid peut ensuite subir un recuit réalisé de manière conventionnelle dans un four de recuit sous atmosphère réductrice, en vue de le recristalliser après l'écrouissage qu'il a subi lors de l'opération de laminage à froid.

Le recuit de recristallisation permet en outre d'activer les faces 5 du substrat 3 afin de favoriser les réactions chimiques nécessaires à l'opération ultérieure de trempé.

Selon la nuance de l'acier, le recuit de recristallisation est effectué à une température comprise entre 650 et 900°C pendant un temps nécessaire à la recristallisation de l'acier et à l'activation des faces 5.

Le substrat 3 est ensuite refroidi à une température voisine de celle d'un bain 13 contenu dans un creuset 15.

La composition du bain 13 est à base de zinc et contient :

- entre 0,5 et 8% en poids d'aluminium, de préférence entre 4,4 et 5,6%, de préférence encore entre 0,5 et 4,5%, de préférence encore entre 0,5 et 3,9%, de préférence encore entre 1,0 et 3,9%, de préférence encore entre 1,5 et 3,9%, et de préférence encore 2 et 3,9% ;
- entre 0,3 et 3,3% en poids de magnésium, de préférence entre 0,3 et 1,5%, de préférence encore entre 0,3 et 0,7%, de préférence encore entre 0,5 et 3,3%, de préférence encore entre 1 et 3,3%, de préférence encore entre 1,5 et 3,3%, de préférence encore entre 2 et 3,3%, et de préférence encore entre 2,5 et 3,3%.

De manière générale, chaque plage de teneur en aluminium indiquée ci-dessus peut être utilisée en combinaison avec chacune des plages de teneur en magnésium pour former un bain 13.

Lorsque la teneur en poids d'aluminium est comprise entre 4,4 et 5,6%, la teneur en poids de magnésium sera de préférence comprise entre 0,3 et 1,5%.

Lorsque la teneur en poids d'aluminium est comprise entre 1,5 et 3,9%, la teneur en poids de magnésium sera de préférence comprise entre 1,0 et 3,3%.

La composition du bain 13 peut également contenir jusqu'à 0,3% en poids d'éléments optionnels d'addition tels que Si, Sb, Pb, Ti, Ca, Mn, Sn, La, Ce, Cr, Ni, Zr ou Bi.

Ces différents éléments peuvent permettre, entre autres, d'améliorer la résistance à la corrosion du revêtement ou bien sa fragilité ou son adhésion, par exemple.

L'homme du métier qui connaît leurs effets sur les caractéristiques du revêtement saura les employer en fonction du but complémentaire recherché. On a également vérifié que ces éléments n'interféraient pas avec la maîtrise de l'ondulation obtenue par le procédé selon l'invention.

Enfin, le bain 13 peut contenir des impuretés inévitables provenant des lingots d'alimentation du creuset ou bien encore du passage du substrat 3 dans le bain 13. On pourra ainsi citer notamment le fer.

Après passage dans le bain 13, le substrat 3 est revêtu sur ses deux faces 5 par les revêtements 7 pour obtenir la tôle 1.

Comme illustré par la figure 2, la tôle 1 est ensuite soumise à un essorage au moyen de buses 17 placées de part et d'autre de la tôle 1 et qui projettent un gaz d'essorage, de préférence un gaz inerte, vers les surfaces extérieures 21 des revêtements 7. Le gaz d'essorage est éjecté de chaque buse 17 le long d'une direction principale d'éjection E.

Les directions principales d'éjection E de chaque buse 17 sont matérialisées en pointillés sur les figures 2 et 3.

Dans l'exemple représenté, les directions E sont horizontales et orthogonales à la tôle 1. Dans d'autres modes de réalisation, les directions E peuvent avoir d'autres inclinaisons par rapport à la tôle 1.

La vitesse V de défilement du substrat 3 sur la ligne de production utilisée et donc devant les buses 17 est en général comprise entre 80m/min et 300 m/min, et elle est de préférence supérieure à 120 m/min, voire 150m/min.

Afin de limiter l'oxydation des revêtements 7, on prévoit un caisson de confinement 23 pour confiner l'atmosphère autour de la tôle 1 au moins en aval des zones d'impact I du gaz d'essorage sur la tôle 1. Le terme aval s'entend ici par rapport au sens de défilement S de la tôle 1 en regard des buses 17.

Le caisson de confinement 23 peut en variante se prolonger vers l'amont jusqu'à la surface du bain 13 ou jusqu'à une position intermédiaire entre les buses 17 et la surface du bain 13.

Le caisson de confinement 23 délimite une zone confinée 24 qui contient les zones d'impact I du gaz d'essorage sur la tôle 1 et s'étend à partir de celles-ci au moins vers l'aval.

Dans l'exemple décrit ci-dessus, les buses 17 ont des structures et des positionnements par rapport à la tôle 1 qui sont analogues et elles fonctionnent avec des réglages analogues. Ainsi, seule la buse 17 droite de la figure 2 sera décrite ci-dessous, par référence à la figure 3. On notera également que seule la buse 17 droite est représentée sur la figure 3.

En variante, les buses 17 peuvent avoir des structures différentes, des positions différentes et/ou fonctionner avec des réglages différents. On peut également ne prévoir une buse que d'un côté de la tôle 1.

La buse 17 présente une sortie 25 par laquelle le gaz d'essorage est éjecté vers la surface extérieure 21 du revêtement 7 placé en regard. Différentes formes extérieures sont envisageables pour la buse 17.

La sortie 25 de la buse 17 est disposée à une distance de Z de la tôle 1 le long de la direction principale d'éjection E.

Lorsque E n'est pas orthogonale à la tôle 1, Z n'est donc pas la plus petite distance entre la tôle 1 et la buse 17. Comme illustré par la figure 4, la sortie 25 se présente généralement sous forme d'une fente qui s'étend, orthogonalement à la direction L et au plan de la figure 3, sur une largeur L au moins égale à la largeur de la tôle 1.

Généralement, la hauteur de la sortie 25, c'est-à-dire sa dimension parallèlement au sens S de défilement de la tôle 1 devant la buse 17, est constante comme illustré par la figure 4. Cela étant, dans certaines variantes, cette hauteur peut varier sur la largeur de la sortie 25. Ainsi, la sortie 25 peut avoir par exemple une forme légèrement évasée vers ses extrémités (forme de noeud papillon).

Afin de tenir compte de ces éventuelles variations de hauteur et des différents modes de réalisation possibles, on considèrera par la suite la hauteur moyenne d de la sortie 25 sur sa largeur L.

La surpression du gaz d'essorage dans la buse 17 par rapport à la pression atmosphérique est notée P et la fraction volumique d'oxygène dans la zone confinée 24 est notée $f_{O_2}$. En d'autres termes, P est la différence entre la pression du gaz d'essorage dans la buse 17 et la pression atmosphérique.

Selon l'invention,

$$\frac{Z}{d} \leq 12 \text{ et } f_{O_2} \leq \frac{10^{-4}}{W^2}\left(0{,}63 + \sqrt{0{,}4 + 94900 * W^2}\right) \text{ (A) avec } W = \frac{\sqrt{PdZ}}{V},$$

où :

Z est exprimée en m
d est exprimée en m
V est exprimée en m.s$^{-1}$
P est exprimée en N.m$^{-2}$

Généralement, le paramètre V est imposé par la nuance du substrat 3 et par la capacité de chauffage dans la zone de recuit de recristallisation du substrat 3. La hauteur d est choisie pour une campagne de production. Il ne reste donc plus que Z, P et $f_{O_2}$ à ajuster pour satisfaire aux exigences ci-dessus.

$f_{O_2}$ est mesurée par exemple après prélèvement dans la zone 24.

Typiquement, un tel prélèvement sera réalisé à une distance relativement proche d'une zone d'impact I, par exemple inférieure ou égale à 3Z, pour être représentative de la fraction volumique d'oxygène au niveau des zones d'impact I.

Il peut également être nécessaire d'étendre le caisson de confinement 23 ou de le modifier pour améliorer le confinement et satisfaire à l'équation (A).

Comme cela sera détaillé par la suite, le respect des conditions ci-dessus permet d'atteindre, après solidification des revêtements 7 et avant éventuelle mise en peinture, un aspect esthétique amélioré.

On laisse refroidir ensuite les revêtements 7 de façon contrôlée pour qu'ils se solidifient.

Lorsque les revêtements 7 sont complètement refroidis, la tôle 1 peut subir une opération de skin-pass pour conférer aux surfaces extérieures 21 des revêtements 7 une texture facilitant la mise en forme ultérieure de la tôle 1.

En effet, l'opération de skin-pass permet de transférer aux surfaces extérieures 21 des revêtements 7 de la tôle 1 une rugosité suffisante pour que sa mise en forme s'effectue dans de bonnes conditions, en favorisant une bonne rétention de l'huile appliquée sur la tôle 1 avant sa mise en forme. Le taux d'allongement de la tôle 1 lors de l'opération de skin-pass est généralement compris entre 0,5 et 2%.

L'opération de skin-pass est généralement réalisée pour une tôle 1 destinée à la fabrication de pièces de carrosserie pour véhicules automobiles.

Lorsque la tôle 1 est destinée à la fabrication d'appareils électroménagers, par exemple, on ne procède pas à cette opération supplémentaire.

La tôle 1 skin-passée ou non peut ensuite être découpée puis mise en forme, par exemple par emboutissage, pliage ou profilage, pour former une pièce que l'on peut ensuite mettre en peinture pour former, sur chaque revêtement 7, un film de peinture (ou système peinture).

Dans le cas des pièces pour les appareils électroménagers, on peut aussi soumettre éventuellement les films de peinture à un recuit par des moyens physiques et/ou chimiques, connus en eux-mêmes.

A cet effet, on peut faire passer la pièce peinte au travers d'un four à air chaud ou à induction, ou encore sous des lampes UV ou sous un dispositif diffusant des faisceaux d'électrons.

Pour les applications automobiles, après phosphatation, on trempe chaque pièce dans un bain de cataphorèse, et on applique successivement, une couche de peinture d'apprêt, une couche de peinture de base, et éventuellement une couche de vernis de finition.

Avant d'appliquer la couche de cataphorèse sur la pièce, celle-ci est préalablement dégraissée puis phosphatée de manière à assurer l'adhérence de la cataphorèse.

La couche de cataphorèse assure à la pièce une protection complémentaire contre la corrosion. La couche de peinture d'apprêt, généralement appliquée au pistolet, prépare l'apparence finale de la pièce et la protège contre le gravillonnage et contre les UV. La couche de peinture de base confère à la pièce sa couleur et son apparence finale. La couche de vernis confère à la surface de la pièce une bonne résistance mécanique, une résistance contre les agents chimiques agressifs et un bon aspect de surface.

Généralement, le poids de la couche de phosphatation est compris entre 1,5 et 5 g/m$^2$.

Les films de peinture mis en oeuvre pour protéger et garantir un aspect de surface optimal aux pièces, comprennent par exemple une couche de cataphorèse de 15 à 25 $\mu$m d'épaisseur, une couche de peinture d'apprêt de 35 à 45 $\mu$m d'épaisseur, et une couche de peinture de base de 40 à 50 $\mu$m d'épaisseur.

Dans les cas, où les films de peinture comprennent en outre une couche de vernis, les épaisseurs des différentes couches de peinture sont généralement les suivantes :

couche de cataphorèse : entre 15 et 25$\mu$m, de préférence inférieure à 20$\mu$m,
couche de peinture d'apprêt : inférieure à 45$\mu$m,
couche de peinture de base : inférieure à 20$\mu$m, et
couche-de vernis : inférieure à 55 $\mu$m.

Les films de peinture pourront également ne pas comprendre de couche de cataphorèse, et ne comprendre qu'une couche de peinture d'apprêt et une couche de peinture de base et éventuellement une couche de vernis.

De préférence, l'épaisseur totale des films de peinture sera inférieure à 120 $\mu$m voire 100 $\mu$m.

L'invention va à présent être illustrée par des essais donnés à titre indicatif et non limitatif.

Le tableau I ci-dessous détaille les conditions d'une série d'essais menés avec des valeurs différentes de Z, d, V, P et $f_{02}$.

Dans ces essais, les revêtements 7 avaient des teneurs en poids d'aluminium d'environ 3,7% et de magnésium d'environ 3,1%. Leurs épaisseurs étaient d'environ 10$\mu$m. La température du bain pour réaliser ces revêtements 7 était d'environ 420°C. Le gaz d'essorage utilisé était à base d'azote et la vitesse de refroidissement des revêtements 7 jusqu'à leur solidification était comprise entre 14 et 15°C/s.

Tableau I

| Essais | Z (m) | d (m) | Z/d | V (m/s) | P en N/m2 | $f_{02}$ | Eq (A) | Défaut |
|---|---|---|---|---|---|---|---|---|
| 1 | 0,012 | 0,001 | 12 | 0,617 | 12100 | 0,03 | OUI | N |
| | 0,012 | 0,001 | 12 | 0,617 | 12100 | 0,04 | OUI | N |
| | 0,012 | 0,001 | 12 | 0,617 | 12100 | 0,06 | NON | O |
| | 0,012 | 0,001 | 12 | 0,617 | 12100 | 0,07 | NON | O |
| 2 | 0,01 | 0,001 | 10 | 1,000 | 15000 | 0,04 | OUI | N |
| | 0,01 | 0,001 | 10 | 1,000 | 15000 | 0,06 | OUI | N |
| | 0,01 | 0,001 | 10 | 1,000 | 15000 | 0,07 | OUI | N |
| | 0,01 | 0,001 | 10 | 1,000 | 15000 | 0,09 | NON | O |
| 3 | 0,008 | 0,001 | 8 | 1,667 | 17500 | 0,10 | OUI | N |
| | 0,008 | 0,001 | 8 | 1,667 | 17500 | 0,12 | OUI | N |
| | 0,008 | 0,001 | 8 | 1,667 | 17500 | 0,13 | OUI | N |
| | 0,008 | 0,001 | 8 | 1,667 | 17500 | 0,15 | NON | O |
| 4 | 0,005 | 0,001 | 5 | 2,500 | 12700 | 0,21 | OUI | N |

Les colonnes de droite précisent pour chaque essai si les paramètres satisfaisaient à l'équation (A) et si les défauts mentionnés précédemment étaient présents (lettre O) ou s'ils n'étaient pas observables (lettre N).

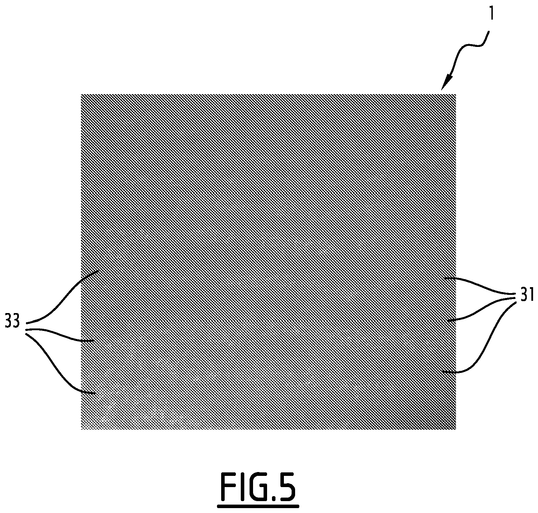

La figure 5 illustre un essai où ces défauts étaient présents.

On observe alors visuellement à la surface extérieure des revêtements 7 une alternance de zones mates 31 et de zones brillantes 33.

Le respect de la condition $\dfrac{Z}{d} \leq 12$ et le respect de l'équation (A) permet, comme démontré par le tableau I ci-dessus, d'éviter l'apparition de ces défauts et donc d'améliorer l'aspect esthétique des revêtements 7 de tôles 1.

## Revendications

**1.** Procédé de réalisation d'une tôle (1) comprenant un substrat (3) en acier dont au moins une face (5) est revêtue par un revêtement métallique (7) comprenant de l'Al et du Mg, le reste du revêtement métallique (7) étant du Zn, des impuretés inévitables et éventuellement un ou plusieurs éléments additionnels choisis parmi Si, Sb, Pb, Ti, Ca, Mn, Sn, La, Ce, Cr, Zr ou Bi, la teneur en poids de chaque élément additionnel dans le revêtement métallique (7) étant inférieure à 0,3%, le revêtement métallique (7) ayant une teneur en poids d'Al comprise entre 0,5 et 8% et une teneur en poids de Mg comprise entre 0,3 et 3,3%, le procédé comprenant au moins des étapes de :

- fourniture du substrat (3),
- dépôt d'un revêtement métallique (7) sur au moins une face (5) par trempe du substrat (3) dans un bain pour obtenir la tôle (1),
- essorage du revêtement métallique (7) par au moins une buse (17) projetant par au moins une sortie (25) un gaz d'essorage sur le revêtement métallique (7), la tôle (1) défilant devant la buse, le gaz d'essorage étant éjecté de la buse (17) le long d'une direction principale d'éjection (E), un caisson de confinement (23) délimitant une zone confinée (24) au moins en aval de la zone d'impact (I) du gaz d'essorage sur la tôle (1),
- solidification du revêtement métallique (7),

procédé dans lequel $\dfrac{Z}{d} \leq 12$ et $f_{o_2} \leq \dfrac{10^{-4}}{W^2}\left(0,63 + \sqrt{0,4 + 94900 * W^2}\right)$ (A) avec $W = \dfrac{\sqrt{PdZ}}{V}$,

Z étant la distance entre la tôle (1) et la buse (17) le long de la direction principale d'éjection (E), Z étant exprimée en m, $f_{02}$ étant la fraction volumique d'oxygène dans la zone confinée (24).

d étant la hauteur moyenne de la sortie (25) de la buse (17) le long du sens (S) de défilement de la tôle (1) devant la buse (17), d étant exprimée en m,

V étant la vitesse de défilement de la tôle (1) devant la buse (17), V étant exprimée en m.s$^{-1}$, et
P étant la surpression du gaz d'essorage dans la buse (17) par rapport à la pression atmosphérique, P étant exprimée en N.m$^{-2}$.

2. Procédé selon la revendication 1, dans lequel le procédé comprend, avant l'étape de dépôt, une étape de laminage à froid de la tôle (1).

3. Procédé selon l'une des revendications précédentes, le procédé comprenant, après l'étape de solidification, une étape de skin-pass de la tôle (1).

4. Procédé selon l'une des revendications précédentes, dans lequel le revêtement métallique (7) a une teneur en poids d'Al comprise entre 0,5 et 3,9%.

5. Procédé selon la revendication 4, dans lequel le revêtement métallique (7) a une teneur en poids d'Al comprise entre 1,5 et 3,9%.

6. Procédé selon l'une des revendications 1 à 3, dans lequel le revêtement métallique (7) a une teneur en poids d'Al comprise entre 4,4 et 5,6%.

7. Procédé selon l'une des revendications précédentes, dans lequel le revêtement métallique (7) a une teneur en poids de Mg comprise entre 1,0 et 3,3%.

8. Procédé selon la revendication 7, dans lequel le revêtement métallique (7) a une teneur en poids de Mg comprise entre 2,5 et 3,3%.

9. Procédé selon l'une des revendications 1 à 6, dans lequel le revêtement métallique (7) a une teneur en poids de Mg comprise entre 0,3 et 1,5%.

## Patentansprüche

1. Verfahren zur Herstellung eines Blechs (1), ein Stahlsubstrat (3) umfassend, dessen mindestens eine Fläche (5) mit einer Metallbeschichtung (7) beschichtet ist, die Al und Mg umfasst, wobei der Rest der Metallbeschichtung (7) Zn, unvermeidbare Verunreinigungen und gegebenenfalls ein oder mehrere Zusatzelemente, ausgewählt aus Si, Sb, Pb, Ti, Ca, Mn, Sn, La, Ce, Cr, Zr oder Bi ist, wobei der Gehalt an jedem Zusatzelement in der Metallbeschichtung (7) in Gewichtsprozenten kleiner als 0,3% ist, die Metallbeschichtung (7) einen Al-Gehalt in Gewichtsprozenten zwischen 0,5 und 8% und einen Mg-Gehalt in Gewichtsprozenten zwischen 0,3 und 3,3% aufweist, wobei das Verfahren mindestens die Schritte umfasst:

- Bereitstellen des Substrats (3),
- Abscheiden einer Metallbeschichtung (7) auf mindestens eine Fläche (5) durch Tauchen des Substrats (3) in ein Bad, um das Blech (1) zu erhalten,
- Aufschleudern der Metallbeschichtung (7) durch mindestens eine Düse (17), die durch mindestens einen Auslass (25) ein Schleudergas auf die Metallbeschichtung (7) projiziert, wobei das Blech (1) vor der Düse abläuft, wobei das Schleudergas von der Düse (17) entlang einer Hauptsprührichtung (E) ausgesprüht wird, wobei ein Einschlusskasten (23) eine Einschlusszone (24) mindestens stromabwärts zu der Auftreffzone (I) des Schleudergases auf das Blech (1) begrenzt,
- Verfestigen der Metallbeschichtung (7),

ein Verfahren, bei dem $\dfrac{Z}{d} \leq 12$ und

$$f_{O_2} \leq \frac{10^{-4}}{W^2}\left(0,63 + \sqrt{0,4 + 94900 * W^2}\right)$$

$$W = \frac{\sqrt{PdZ}}{V}$$

(A) mit ,

wobei Z der Abstand zwischen dem Blech (1) und der Düse (17) entlang der Hauptsprührichtung (E) ist, und Z in m ausgedrückt ist, $f_{0_2}$ die Volumenfraktion an Sauerstoff in der eingeschlossenen Zone (24) ist, d die mittlere Höhe des Auslasses (25) der Düse (17) entlang der Richtung (S) des Ablaufs des Blechs (1) vor der Düse (17) ist, und d in m ausgedrückt ist,

V die Vorschubgeschwindigkeit des Blechs (1) vor der Düse (17) ist, und V in m · s$^{-1}$ ausgedrückt ist, und P der Überdruck des Schleudergases in der Düse (17) in Bezug auf den atmosphärischen Druck ist, und P in N · m$^{-2}$ ausgedrückt ist.

2. Verfahren nach Anspruch 1, bei dem das Verfahren vor dem Abscheideschritt einen Schritt des Kaltlaminierens des Blechs (1) aufweist.

3. Verfahren nach einem der vorhergehenden Ansprüche, wobei das Verfahren nach dem Schritt des Verfestigens einen Skin-Pass Schritt des Blechs (1) umfasst.

4. Verfahren nach einem der vorhergehenden Ansprüche, bei dem die Metallbeschichtung (7) einen Al-Gehalt in Gewichtsprozenten zwischen 0,5 und 3,9% aufweist.

5. Verfahren nach Anspruch 4, bei dem die Metallbeschichtung (7) einen Al-Gehalt in Gewichtsprozenten zwischen 1,5 und 3,9% aufweist.

6. Verfahren nach einem der Ansprüche 1 bis 3, bei dem die Metallbeschichtung (7) einen Al-Gehalt in Gewichtsprozenten zwischen 4,4 und 5,6% aufweist.

7. Verfahren nach einem der vorhergehenden Ansprüche, bei dem die Metallbeschichtung (7) einen Mg-Gehalt in Gewichtsprozenten zwischen 1,0 und 3,3% aufweist.

8. Verfahren nach Anspruch 7, bei dem die Metallbeschichtung (7) einen Mg-Gehalt in Gewichtsprozenten zwischen 2,5 und 3,3% aufweist.

9. Verfahren nach einem der Ansprüche 1 bis 6, bei dem die Metallbeschichtung (7) einen Mg-Gehalt in Gewichtsprozenten zwischen 0,3 und 1,5% aufweist.


**Claims**

1. A method for producing a sheet (1) comprising a substrate (3) made of steel whereof at least one surface (5) is coated with a metal coating (7) comprising of Al and Mg, with the remainder of the metal coating (7) consisting of Zn, inevitable impurities and possibly one or more additional elements selected from among Si, Sb, Pb, Ti, Ca, Mn, Sn, La, Ce, Cr, Zr or Bi, the content by weight of each additional element in the metal coating (7) being less than 0.3%, the metal coating (7) having a content by weight of Al comprised between 0.5% and 8% and a content by weight of Mg comprised between 0.3% and 3.3%, the method including at least the steps of:

- provision of the substrate (3) ;
- depositing of a metal coating (7) over at least one surface (5) by dipping the substrate (3) in a bath in order to obtain the sheet (1) ;
- wiping of the metal coating (7) by means of at least one nozzle (17) projecting through at least one outlet (25) a wiping gas onto the metal coating (7), the sheet (1) being run in front of the nozzle, the wiping gas being ejected from the nozzle (17) along a primary direction of ejection (E), a confinement box (23) delimiting a confined zone (24) at least downstream of the zone of impact (I) of the wiping gas on the sheet (1) ;
- solidification of the metal coating (7),

a method in which $\dfrac{Z}{d} \leq 12$ and $f_{O_2} \leq \dfrac{10^{-4}}{W^2}\left(0.63 + \sqrt{0.4 + 94900 * W^2}\right)$ (A) with $W = \dfrac{\sqrt{PdZ}}{V}$ ,

with Z being the distance between the sheet (1) and the nozzle (17) along the primary direction of ejection (E), Z being expressed in m, $f_{0_2}$ being the volume fraction of oxygen in the confined zone (24),

with d being the average height of the outlet (25) of the nozzle (17) along the direction (S) of movement of the sheet (1) running in front of the nozzle (17), d being expressed in m,

with V being the speed of movement of the sheet (1) running in front of the nozzle (17), V being expressed in ms$^{-1}$ , and

P being the excess pressure of the wiping gas in the nozzle (17) as compared to the atmospheric pressure, P being expressed in Nm$^{-2.}$

2. The method according to claim 1, wherein the method includes, prior to the coating deposition step, a step of cold rolling of the sheet (1).

3. The method according to one of the preceding claims, wherein the method includes, after the step of coating solidification, a step of skin-pass rolling of the sheet (1).

4. The method according to one of the preceding claims, wherein the content by weight of Al in the metal coating (7) is comprised between 0.5% and 3.9%.

5. The method according to claim 4, wherein the content by weight of Al in the metal coating (7) is comprised between 1.5% and 3.9%.

6. The method according to one of claims 1 to 3, wherein the content by weight of Al in the metal coating (7) is comprised between 4.4% and 5.6%.

7. The method according to one of the preceding claims, wherein the content by weight of Mg in the metal coating (7) is comprised between 1.0% and 3.3%.

8. The method according to claim 7, wherein the content by weight of Mg in the metal coating (7) is comprised between 2.5% and 3.3%.

9. The method according to one of claims 1 to 6, wherein the content by weight of Mg in the metal coating (7) is comprised between 0.3% and 1.5%.

FIG.1

FIG.2

FIG.3

FIG.4

FIG.5